# EUROPÄISCHE PATENTSCHRIFT

(11) **EP 3 291 135 B1**
(45) Veröffentlichungstag und Bekanntmachung des Hinweises auf die Patenterteilung: **15.11.2023**
(21) Anmeldenummer: 17185873.1
(22) Anmeldetag: 11.08.2017
(51) Int. Cl.: G08B 13/19, G08B 25/00, G08B 25/08

(54) **ÜBERWACHUNG VON RAUMBEREICHEN MITTELS REINIGUNGSROBOTER**
MONITORING OF AREAS BY ROBOT CLEANER
SURVEILLANCE DES ZONES DÉLIMITÉES AU MOYEN DU ROBOT DE NETTOYAGE

(30) Priorität: 30.08.2016 DE 102016216291
(43) Veröffentlichungstag der Anmeldung: 07.03.2018
(73) Patentinhaber: BSH Hausgeräte GmbH, 81739 München (DE)
(72) Erfinder: Fremerey, Maximilian, 97616 Bad Neustadt/Saale (DE)

(56) Entgegenhaltungen:
- EP-A1- 2 933 953
- EP-A2- 0 522 200
- US-A- 5 202 661

## Beschreibung

### GEBIET DER ERFINDUNG

Die vorliegende Erfindung betrifft ein Verfahren zum Überwachen eines vorgegebenen Bereichs für eine Steuerungseinrichtung mittels eines Reinigungsroboters gemäß Anspruch 1, eine Steuerungseinrichtung für den Reinigungsroboter zum Überwachen des vorgegebenen Bereichs gemäß Anspruch 12 unter Verwendung des Verfahrens gemäß Anspruch 1, sowie einen Reinigungsroboter mit einer solchen Steuerungseinrichtung gemäß Anspruch 13 unter Verwendung des Verfahrens nach Anspruch 1. Insbesondere ist die Erfindung auf die Überwachung von Räumen gerichtet, in denen sich Wärmequellen wie beispielsweise eine Bodenheizung oder Wandheizung befinden.

### STAND DER TECHNIK

Aus dem Stand der Technik ist beispielsweise die Druckschrift US 5,202,661 A, EP 2 977 843 A1 sowie EP 2 423 893 A1 bekannt, die einen Lösungsansatz für eine Überwachung von Räumlichkeiten bzw. Bereichen im Haushalt unter Verwendung von Reinigungsrobotern darlegt. Ziel der Überwachung ist, einen Alarm auszulösen, sobald eine Bewegung innerhalb des überwachten Bereichs detektiert wird. Ein Benutzer wird mittels einer Alarmbenachrichtigung, beispielsweise auf seinem mobilen Empfangsgerät, in Kenntnis gesetzt und kann eine sich in einem Sichtbereich einer Kamera des Reinigungsroboters befindliche Situation bewerten und weitere Schritte einleiten. Anhand eines softwaregestützten Auswertealgorithmus wird festgestellt, wie viele Pixel sich von einem Einzelbild zum nächsten verändert haben. Beim Überschreiten eines Schwellwerts erfolgt das Auslösen des Alarms bzw. eine Benachrichtigung des Benutzers, dass eine Bewegung innerhalb des überwachten Bereichs der Kamera stattgefunden hat.

Ein weiteres Beispiel zur Überwachung von Bereichen mittels eines Reinigungsroboters ist aus der DE 10 2010 037 100 A1 bekannt. Dabei erfolgt eine Erfassung eines Gegenstandes, ggf. hinsichtlich Bewegung oder Form des Gegenstandes, mittels eines Vergleichs mit diesbezüglich zu dem Gegenstand in dem Bereich gespeicherten Daten oder zuvor von dem Reinigungsroboter über einen gewissen Zeitraum erfassten Daten. Abweichungen bei der erneuten Erfassung des Gegenstandes dienen als Auslöser für einen akustischen Alarm oder eine Benachrichtigung eines Benutzers.

Weitere herkömmliche Überwachungssysteme verwenden Sensoren für Wärmestrahlung wie beispielsweise einen PIR-Sensor, einen so genannten Passiven-Infrarot-Sensor, der auf einem pyroelektrischen Prinzip beruht und den Vorteil besitzt, dass er bei Vorhandensein einer hinreichend nahen Wärmequelle eine messbar veränderliche elektrische Spannung erzeugt. Tritt demnach eine Wärmequelle, zum Beispiel ein Mensch oder ein Tier in den überwachten Bereich eines solchen PIR-Sensors ein, so kann eine dadurch im Sensor erzeugte Spannung verwendet werden, einen Alarm auszulösen. Allerdings detektiert ein PIR-Sensor, der in einen Reinigungsroboter implementiert ist, auch stationäre Wärmequellen, wie Heizungen, elektrische Geräte und dergleichen, an denen sich der Reinigungsroboter vorbei bewegt. Zudem hat ein PIR-Sensor den Nachteil, dass er bei Bereichen mit Fußbodenheizungen während einer Erwärmungsphase der Fußbodenheizung zu Fehlalarmen neigt, d. h., dass der PIR-Sensor ohne die Anwesenheit einer physisch vorhandenen sich bewegenden Wärmequelle, trotzdem einen Alarm auslösen kann. Einer der Gründe hierfür ist bei flächiger Erwärmung infolge der Fußbodenheizung bedingte Luftbewegung beim Vermischen von kälteren und wärmeren Luftschichten im überwachten Raum oder Bereich. Dieses Phänomen kann auch bei Sonneneinstrahlung auftreten. Ein mit mehreren Infrarot-Sensoren ausgerüsteter Reinigungsroboter ist aus der Druckschrift US 2005/0237189 A1 bekannt. Die einzelnen Infrarot-Sensoren dienen einer zuverlässigen Identifizierung und Ortung von Gegenständen und Personen. Gemäß einem in dem Reinigungsroboter hinterlegten abgestuften Sicherheitskonzept können Personen im Arbeitsbereich des Reinigungsroboters gewarnt werden oder es kann ein Alarm ausgelöst werden, wenn sich Personen - Einbrecher - unbefugt im Arbeitsbereich des Reinigungsroboters befinden. Der Reinigungsroboter kann gezielt zur Überwachung oder zur Reinigung eines bestimmten Raumes programmiert und eingesetzt werden. Folglich sind die vorhandenen Lösungen zur Überwachung eines Raumes bzw. Bereichs noch nicht ganz ausgereift. Denn das Auslösen von Fehlalarmen führt in erster Linie zu mehr Aufwand für den Nutzer und kann im schlimmsten Fall aufgrund des Fehlalarms verursachter Einsätze der Polizei oder der Wachdienste hohe Kosten nach sich ziehen.

### DER ERFINDUNG ZUGRUNDE LIEGENDE AUFGABE

Der Erfindung liegt die Aufgabe zugrunde, ein verbessertes Verfahren der Eingangs näher beschriebenen Art zum Überwachen eines vorgegebenen Bereichs so weiterzubilden, dass insbesondere die Zuverlässigkeit beim Auslösen eines Alarms erhöht wird und dadurch Fehlalarme vermieden werden. Vor allem ist es ein Anliegen der Erfindung, kostengünstige und bereits vorhandene Sensorik, in Reinigungsrobotern, zusätzlich zu verwenden, um Fehlalarme bei einer Erkennung von Bewegungen und insbesondere von Bewegungen und Änderungen in Bereichen mit einer Fußbodenheizung zu minimieren und damit eventuell unerwünschte Personen im überwachten Bereich zu detektieren.

### ERFINDUNGSGEMÄßE LÖSUNG

Die Lösung der gestellten Aufgabe gelingt unter Einsatz eines Verfahrens mit den Merkmalen des Anspruchs 1.

Dabei umfasst das erfindungsgemäße Verfahren zum Überwachen eines vorgegebenen Bereichs für eine Steuerungseinrichtung eines Reinigungsroboters, die einen ersten Sensor für Wärmestrahlung und zumindest einen weiteren Sensor aufweist, wobei der Reinigungsroboter den ersten Sensor für Wärmestrahlung und zumindest den weiteren Sensor umfasst, die Schritte:
- gleichzeitiges Erfassen von Sensor-Signalen des ersten Sensors für Wärmestrahlung und des zumindest einen weiteren Sensors an einem Beobachtungspunkt in einem vorbestimmten zeitlichen Intervall;
- Umformen der erfassten Sensor-Signale in von der Steuerungseinrichtung verarbeitbare Sensor-Daten,
- Abspeichern der Sensor-Daten des jeweiligen Sensors in zumindest einem Datenspeicher der Steuerungseinrichtung;
- Ermitteln einer Abweichung zumindest zweier zeitlich verschiedenen Sensor-Daten des jeweiligen Sensors;
- Vergleichen der ermittelten Abweichung der Daten des jeweiligen Sensors mit einem vorgegebenen Schwellwert des jeweiligen Sensors;
- Bereitstellen und/oder Ausgeben eines Ergebnisses des Vergleichs, wenn ein vorgegebener Schwellwert des jeweiligen Sensors überschritten wird, wobei sich der Reinigungsroboter an zumindest einen weiteren ortsfesten Beobachtungspunkt begibt, wenn nur ein vorgegebener Schwellwert des jeweiligen Sensors (D1, D2, ..., DN) des Reinigungsroboters überschritten (S7) wird; und
- Ausgeben eines Warnsignals, wenn der Schwellwert des ersten Sensors für Wärmestrahlung des Reinigungsroboters und ein Schwellwert des zumindest einen weiteren Sensors des Reinigungsroboters gleichzeitig überschritten werden.

Somit werden Abweichungen zumindest zweier Sensor-Daten jeweils desselben Sensors zu vorbestimmten zeitlichen Intervallen ermittelt, und zwar bei/von zumindest zwei unabhängig voneinander arbeitenden Sensoren. Zweckmäßiger Weise begibt sich der Reinigungsroboter an zumindest einen weiteren ortsfesten Beobachtungspunkt, wenn nur ein vorgegebener Schwellwert des jeweiligen Sensors überschritten wird. Der Reinigungsroboter agiert somit in einem Verdachtsmodus, also in einen Zustand höherer Alarmbereitschaft zu versetzen, der ihn dazu veranlasst, eine weitere Messung bzw. Erfassung von Sensor-Signalen von einem anderen Beobachtungspunkt aus vorzunehmen. Dadurch können eventuelle zufällige Sensor-Signale überprüft werden, wobei insgesamt die Plausibilität einzelner Ergebnisse der Messungen von bestimmten Beobachtungspunkten aus überprüft werden kann, um ein Auslösen eventueller fehlerhafter Warnsignale zu minimieren oder gar auszuschließen. Ein Warnsignal wird nur dann ausgelöst, wenn beide Sensoren eine Unregelmäßigkeit detektieren und die ermittelte Abweichung der Daten des jeweiligen Sensors einen vorgegebenen Schwellwert überschreiten. Die Sensor-Daten sind hier als aus den Sensor-Signalen gewonnene und von einer herkömmlichen Recheneinheit weiter verarbeitbare Messwerte zu verstehen. Dadurch kann eine Zuverlässigkeit bei einer Wahrscheinlichkeitsaussage darüber, ob in dem abgetasteten Bereich der Sensoren eine ungewollte Situation oder Zustand vorliegt, erhöht werden und unerwünschte Personen - z. B. Einbrecher - detektiert werden. Dabei verbessert sich die Wahrscheinlichkeit bzw. Plausibilität der Aussage mit der Anzahl der zusätzlichen zum ersten Sensor für Wärmestrahlung unabhängig voneinander arbeitenden Sensoren. Vorliegend detektieren ein Sensor für Wärmestrahlung und ein weiterer Überwachungs-Sensor gemeinsam denselben Raum bzw. Bereich und lösen erst bei Abweichungen gegenüber einem definierten Normbereich der beiden Sensoren das Warnsignal aus; d. h., mit anderen Worten führt eine Abweichung des Ergebnisses bei einem einzelnen Sensor noch zu keinem Warnsignal. Schaltungstechnisch lässt sich ein solcher Überprüfungsschritt mittels eines logischen UND-Gatters lösen.

Insbesondere können Fehlalarme in einem Überwachungsbereich vermieden werden, die z. B. durch einen sich erwärmenden Heizungskörper, Fußboden oder durch Sonneneinstrahlung verursacht werden können, indem der Sensor für Wärmestrahlung auf vorbestimmte Überwachungsbereiche und/oder Gegenstände im überwachten Bereich gezielt eingestellt bzw. programmiert wird. Dadurch lassen sich gezielt Schwellwerte, z. B. für einen Heizkörper oder kleinere Lebewesen, beispielsweise Haustiere, mit einer unterschiedlichen Priorität bewerten.

Im Sinne der Erfindung sind mit zumindest einem weiteren Sensor, der mit dem ersten Sensor für Wärmestrahlung zusammen eingesetzt wird, im Wesentlichen elektrische berührungslose Sensoren gemeint, die als Bewegungsmelder eingesetzt werden können. Ein Bewegungsmelder erkennt Bewegungen in seiner näheren Umgebung bzw. dem überwachten Bereich und kann als elektrischer Schalter/Auslöser bzw. als Präsenzmelder arbeiten. Hauptsächlich wird er zum Einschalten einer Beleuchtung oder zum Auslösen eines Warnsignals eingesetzt. Ein Bewegungsmelder kann aktiv mit elektromagnetischen Wellen, z. B. HF-Sensor oder Dopplerradar, mit Ultraschall, z. B. Ultraschall-Bewegungsmelder oder Laser oder passiv anhand der Infrarotstrahlung der Umgebung arbeiten. Es gibt auch Kombinationen davon. Ein PIR-Sensor - englisch passive infrared - ist der am häufigsten eingesetzte Typ von Bewegungsmelder. Er reagiert optimal auf Winkeländerungen, wenn also beispielsweise eine Person am Sensor vorbeigeht. Ein Dopplerradar reagiert optimal, wenn sich ein Abstand zum Sensor ändert. HF-Sensortechnik durchdringt auch Glas, Holz und Leichtbauwände und reagiert auf jede Bewegung, unabhängig von Wärme.

Durch eine gezielte Kombination von Sensoren kann das Verfahren optimal auf die Bedürfnisse des Benutzers bzw. an den zu überwachenden Bereich angepasst werden.

Ein weiterer Aspekt der Erfindung betrifft eine Steuerungseinrichtung in einem Reinigungsroboter zum Überwachen eines vorgegebenen Bereichs gemäß vorstehend beschriebenen Verfahren, wobei die Steuereinrichtung umfasst:
- einen ersten Sensor zum Erfassen von Wärmestrahlung und zumindest einem weiteren Sensor, welche eingerichtet sind, gleichzeitig Sensor-Signale an einem Beobachtungspunkt in einem vorbestimmten zeitlichen Intervall zu erfassen, wobei der Reinigungsroboter den ersten Sensor für Wärmestrahlung und zumindest den weiteren Sensor umfasst,
- Mittel, die Sensor-Signale in von der Steuerungseinrichtung verarbeitbare Sensor-Daten umzuformen,
- zumindest einen Datenspeicher zum Abspeichern der Sensor-Daten des jeweiligen Sensors der Steuerungseinrichtung;
- Mittel zum Ermitteln einer Abweichung zumindest zweier zeitlich verschiedener Sensor-Daten des jeweiligen Sensors,
- Mittel zum Vergleichen der ermittelten Abweichung der Daten des jeweiligen Sensors mit einem vorgegebenen Schwellwert des jeweiligen Sensors,
- Mittel zum Bereitstellen und/oder Ausgeben eines Ergebnisses des Vergleichs, wenn ein vorgegebener Schwellwert des jeweiligen Sensors überschritten wird;
- Mittel zum Begeben des Reinigungsroboters an zumindest einen weiteren ortsfesten Beobachtungspunkt, wenn nur ein vorgegebener Schwellwert des jeweiligen Sensors (D1, D2, ..., DN) des Reinigungsroboters überschritten (S7) wird; und
- Mittel zum Ausgeben eines Warnsignals, wenn der Schwellwert des ersten Sensors für Wärmestrahlung des Reinigungsroboters und ein Schwellwert des zumindest einen weiteren Sensors des Reinigungsroboters gleichzeitig überschritten werden.

Eine Steuerungseinrichtung, die über einen ersten Sensor zum Erfassen von Wärmestrahlung hinaus zumindest einen weiteren Sensor umfasst, gewährleistet zumindest ein redundantes System, welches einen vollständigen Ausfall der Detektierung von Wärmequellen im überwachten Bereich vermeidet und erhöht zum anderen die Aussagewahrscheinlichkeit darüber, ob eine ungewollte Situation im überwachten Bereich vorliegt, indem mittels des zumindest weiteren Sensors eine Plausibilitätsanalyse des Ergebnisses des ersten bzw. anderen Sensors durchgeführt werden kann. Somit wird mit der Ausfallsicherheit auch die Zuverlässigkeit der ermittelten Ergebnisse der Steuerungseinrichtung verbessert.

Zur Verbesserung der Zuverlässigkeit können abgespeicherte Sensoren-Daten, die zu einem Warnsignal der Steuerungseinrichtung geführt haben, nachträglich auch verwendet werden, um das Verfahren anzupassen und/oder die Genauigkeit späterer Ergebnisse zu erhöhen.

Noch ein weiterer Aspekt der Erfindung betrifft einen Reinigungsroboter mit einer vorstehend beschriebenen Steuerungseinrichtung zum Überwachen eines vorgegebenen Bereichs mittels vorstehend beschriebenen Verfahrens.

Gegenüber herkömmlichen Überwachungssystemen mit nur einem Sensor auf einem mobilen Gerät und einem weiteren stationären Sensor zum Überwachen eines Bereichs, ist ein mobiler Reinigungsroboter in der Lage, nahezu alle Hindernisse, wie zum Beispiel Wände, geöffnete Türen oder Ähnliches zu umfahren und in dem zu überwachenden Bereich Beobachtungspunkte anzufahren, die ihm eine genauere Detektierung im überwachten Bereich ermöglichen. Dadurch kann ein Nachteil stationärer Sensoren überwunden werden, die im Allgemeinen nicht in der Lage sind, den gesamten Raum abzudecken, insbesondere verwinkelte Räume und Bereiche.

### BEVORZUGE AUSGESTALTUNG DER ERFINDUNG

Vorteilhafte Aus- und Weiterbildungen, welche einzeln oder in Kombination miteinander eingesetzt werden können, sind Gegenstand der abhängigen Ansprüche. Die für das Verfahren zutreffenden Vorteile gelten gleichermaßen für eine damit betriebene Steuerungseinrichtung sowie einen mit der Steuerungseinrichtung versehenen Reinigungsroboter.

Bei einer bevorzugten Ausführung der Erfindung ist der erste Sensor für Wärmestrahlung ein berührungsloser Sensor. Berührungslose Sensoren erlauben es einem Gegenstand in einem zu überwachenden Bereich aus einer gewissen Entfernung zu detektieren bzw. zu identifizieren. Es ist also nicht erforderlich, dass ein mit einem berührungslosen Sensor für Wärmestrahlung ausgestatteter Reinigungsroboter sich an den detektierten Gegenstand herantasten muss. Darüber hinaus ist es auch möglich, einen weiteren Bereich mit einem berührungslosen Sensor zu überwachen.

Bei einer besonders bevorzugten Ausführungsform ist der berührungslose Sensor für Wärmestrahlung ein Pyrometer oder eine Wärmebildkamera. Ein Pyrometer ist beispielsweise ein PIR-Sensor, der unter Ausnutzung der Pyroelektrizität seiner Empfängerfläche auf eine Temperaturänderung reagiert, die durch eine Strahlungsflussänderung - hauptsächlich durch Wärmestrahlung im mittleren Infrarot; Wellenlänge zirka 3 bis 50 µm - von Menschen, Tieren und Kraftfahrzeugen in seiner näheren Umgebung bewirkt wird. Er reagiert unsensibel auf quasi-statische Wärmeunterschiede, die auf natürliche Weise hervorgerufen werden, wie zum Beispiel durch Sonneneinstrahlung, und kann im Wesentlichen nur sich ändernde Signale wahrnehmen, beispielsweise wenn ein Mensch in den Detektionsbereich des Sensors eintritt. Ein solcher Sensor eignet sich insbesondere zur Präsenzmeldung unerwünschter Personen in einem von ihm überwachten Bereich. Wärmebildkameras sind erheblich teurer als PIR-Sensoren, aber in der Lage, nicht nur die Präsenz eines Gegenstandes oder Körpers zu detektieren, sondern auch Größe und Form des detektierten Körpers oder Gegenstands zu identifizierten. Aufgrund ihrer höheren Auflösung ist eine Wärmebildkamera in der Lage, identifizierte Gegenstände oder Körper auch zu klassifizieren und dadurch die Ergebnisse genauer zu differenzieren. Somit eignen sich Wärmebildkameras beispielsweise, ein kleines Haustier von einem erwachsenen Menschen deutlich zu unterscheiden. Eine größere Differenzierung der Ergebnisse lässt auch eine Priorisierung der Ergebnisse und damit auch die Auswahl eines bestimmten Warnsignals zu.

Spezielle Wärmebildkameras erlauben es, sogar die aufgenommenen Bilder anhand einer mit der Steuerungseinrichtung koppelbaren Kommunikationseinheit an einen Benutzer zu übertragen, damit dieser gezielt weitere Schritte unternehmen kann.

Zweckmäßiger Weise ist der zumindest eine weitere Sensor der Steuerungseinrichtung ein berührungsloser Sensor mit einem von einem Sensor für Wärmestrahlung unterschiedlichen Wirkprinzip. Ergebnisse, die anhand von Sensoren mit unterschiedlichen Wirkprinzipien ermittelt werden, lassen eine zuverlässigere Bewertung zu. Durch den Einsatz unterschiedlicher Sensoren wird also der Wahrscheinlichkeitswert für eine zutreffende Aussage der Ergebnisse erheblich gesteigert. Darüber hinaus sind bereits Sensoren mit unterschiedlichen Wirkprinzipien in Ortung bzw. Navigationssystemen von Reinigungsrobotern integriert, so dass diese nicht zusätzlich eingebaut werden müssen. Dadurch werden effektiv Kosten gespart.

In vorteilhafter Weise kann als weitere bevorzugte Ausführungsform der zumindest eine weitere berührungslose Sensor, d. h., eine Lichtschranke und/oder einer Radar und/oder ein Lidar und/oder ein Sonar und/oder einen Ultraschallsensor eingesetzt werden. Dabei kann der Einsatz der weiteren Sensoren in Abhängigkeit örtlicher Gegebenheiten des zu überwachenden Bereichs und/oder den Bedürfnissen des Benutzers ausgewählt werden.

Die Funktionsweise und Wirkprinzipien der einzelnen Sensoren sind allgemein bekannt, bzw. wurden vorher stehend erläutert.

Erfindungsgemäss befindet sich der Reinigungsroboter beim Erfassen der Sensor-Signale in dem vorbestimmten zeitlichen Intervall ortsfest an dem Beobachtungspunkt. Durch die Einnahme eines festen Beobachtungspunktes des Reinigungsroboters können Bewegungen relativ zu diesem Beobachtungspunkt mit erheblich höherer Genauigkeit von den Sensoren detektiert werden. Dadurch können stationäre Wärmequellen in den zu überwachenden Bereich berücksichtigt werden, die zu einem Fehlalarm führen würden, da diese aufgrund einer Eigenbewegung des Reinigungsroboters durch die Sensoren als sich bewegende Gegenstände bzw. Körper wahrgenommen werden würden.

Insbesondere kann ein Anfahren unterschiedlicher Beobachtungspunkte seitens des Reinigungsroboters bei einer besonders vorteilhaften Ausführungsform des Verfahrens auch vorgesehen werden, um eine Überwachung eines größeren Bereichs zu ermöglichen oder insgesamt eine Reduktion der Fehlalarme zu ermöglichen. Dabei sind der Beobachtungszeit und/oder eine Verweildauer des Reinigungsroboters an dem Beobachtungspunkt und/oder das vorbestimmte zeitliche Intervall beim Erfassen der Sensor-Signale mittels der Steuerungseinrichtung des Reinigungsroboters an dem Beobachtungspunkt variierbar. Ein solcher Modus wird im Folgenden als Patrouillen-Modus definiert. Dabei kann der zu überwachende Bereich zyklisch von dem Reinigungsroboter abgefahrenen und überwacht werden. Somit kann auf den Einsatz mehrerer Bewegungsmelder, die über einen größeren Bereich verstreut würden, verzichtet werden, was auch dem Gestaltungsspielraum des zu überwachenden Bereichs ästhetisch zuträglich wäre.

Bei einer noch vorteilhafteren Ausführungsform wird alternativ oder zusätzlich bestimmt, dass der Beobachtungspunkt und/oder eine Verweildauer des Reinigungsroboters an dem Beobachtungspunkt und/oder das vorbestimmte zeitliche Intervall beim Erfassen der Sensor-Signale mittels der Steuerungseinrichtung des Reinigungsroboters an dem Beobachtungspunkt in Abhängigkeit eines vorgegebenen Kontrollplans bestimmt wird, der in einem Speicher der Steuerungseinrichtung hinterlegt ist. Dadurch kann die Zuverlässigkeit der Ergebnisse weitergehend verbessert werden, da in dem vorgegebenen Kontrollplan Eigentümlichkeiten des zu überwachenden Bereiches gezielt berücksichtigt werden können und dadurch Fehlerquellen beim Detektieren bzw. Identifizierten von Unregelmäßigkeiten noch weiter minimiert werden können.

Die Erfindung weiterbildend ist bevorzugt vorgesehen, dass die von der Steuerungseinrichtung bereitgestellten Ergebnisse des Vergleichs, mit Ergebnissen einer weiteren Überwachungsanlage desselben vorgegebenen Bereichs mittels einer an die Steuerungseinrichtung anschließbaren Kommunikationseinrichtung des Reinigungsroboters gegenseitig übertragbar und kombinierbar sind. Da es sich bei dieser Ausführungsform um eine zusätzliche unabhängige Überwachungsanlage handelt, können Ergebnisse beider Überwachungsvorrichtungen gegenseitig überprüft werden. Besonders vorteilhaft ist dies, wenn ein Reinigungsroboter gemäß einer obigen Ausführungsform an eine bereits bestehende Überwachungsanlage gekoppelt wird und dadurch ein noch zuverlässigeres Überwachungssystem geschaffen werden kann.

Vorzugsweise wird gemäß einer weiteren bevorzugten Ausführungsform mittels der an die Steuerungseinrichtung anschließbaren Kommunikationseinrichtung des Reinigungsroboters das Warnsignal an eine Empfangsvorrichtung des Benutzers und/oder eine zentrale Überwachungsleitstelle ausgegeben. Dadurch kann eine bevorstehende Gefahr, beispielsweise ein Diebstahl effektiv und effizient vorgebeugt oder bekämpft werden.

Durch die vorliegenden Ausführungsformen der Erfindung, die eine Kombination von mehreren Sensoren mit unterschiedlichen Wirkprinzipien vorsehen, kann eine Wahrscheinlichkeit von Fehlalarmen reduziert werden, die dem Kunden durch eine mit einem entsprechenden Verfahren ausgerüstete Steuerungseinrichtung und/oder einem darüber verfügenden Reinigungsroboter gemeldet werden. Insbesondere eignen sich die vorliegenden Ausführungsformen der Erfindung in Gebäuden mit Fußbodenheizung, die zum gegenwärtigen Zeitpunkt bei immer mehr neu gebauten Häusern und Wohnungen eingesetzt werden. Somit wird gleichzeitig mit einer verbesserten Gebrauchstauglichkeit des Reinigungsroboters auch die Kundenzufriedenheit erhöht.

### KURZBESCHREIBUNG DER ZEICHNUNGEN

Weitere vorteilhafte Ausgestaltungen werden nachfolgend an Hand eines in der Zeichnung dargestellten Ausführungsbeispiels, auf welches die Erfindung jedoch nicht beschränkt ist, näher beschrieben.

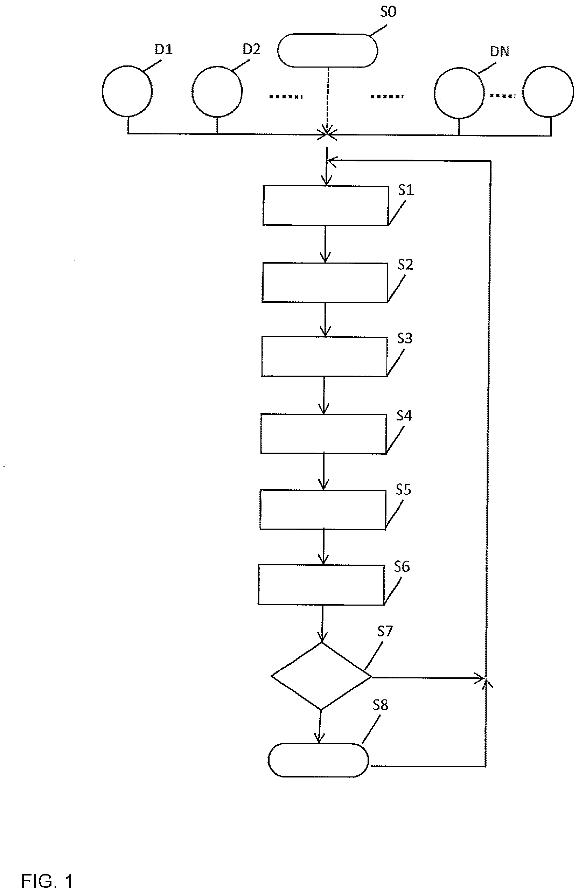

- Fig. 1: veranschaulicht schematisch ein Flussdiagramm eines bevorzugten Ausführungsbeispiels des Verfahrens zum Überwachen eines vorgegebenen Bereichs für eine Steuerungseinrichtung eines Reinigungsroboters.

### AUSFÜHRLICHE BESCHREIBUNG DER ZEICHNUNG

Die Bezugszeichen in sämtlichen Ansprüchen haben keine einschränkende Wirkung, sondern sollen lediglich deren Lesbarkeit verbessern.

Anhand einer einzigen Fig. 1 der Zeichnung wird ein vorteilhaftes Ausführungsbeispiel des Verfahrens zum Überwachen eines vorgegebenen Bereichs für eine Steuerungseinrichtung eines Reinigungsroboters dargestellt. Auch wenn auf eine detaillierte Beschreibung der Steuerungseinrichtung und deren einzelnen Elemente und Module verzichtet wurde, versteht sich selbstredend, dass die einzelnen auszuführenden Verfahrensschritte im Zusammenhang mit Elementen und Modulen der Steuerungseinrichtung bzw. eines damit versehenen Reinigungsroboters gemäß einzelne Ausführungsformen zu verstehen sind.

Das Verfahren dient der Detektion und/oder Identifikation von Gegenständen bzw. Körpern in einem vorbestimmten zu überwachenden Bereich, der von der Steuerungseinrichtung bzw. einem damit ausgerüsteten Reinigungsroboter kontrolliert wird. Insbesondere soll es anhand des Verfahrens möglich sein, bewegliche Gegenstände oder Körper zu detektieren, beispielsweise einen Einbrecher. Im Sinne des dargestellten Ausführungsbeispiels ist mit einem Körper ein lebendiges Wesen, d. h., ein Mensch oder ein Tier gemeint. Besonders bevorzugt soll das Verfahren in der Lage sein, solche Körper auch in einer Umgebung bzw. in einem Bereich zu detektieren, der feststehende Wärmequellen aufweist, zum Beispiel eine Fußbodenheizung. Um eine Detektion in einer solchen Umgebung zu ermöglichen, ist es notwendig, dass eine Steuerungseinrichtung, die sich des Verfahrens bedient, über einen ersten Sensor/Detektor D1 für Wärmestrahlung und zumindest einen weiteren Sensor D2, ..., DN verfügt, über die Sensor-Signale eines zu überwachenden Bereichs erfasst werden können.

Beim Einschalten bzw. Starten S0 des Verfahrens durchläuft die Steuerungseinheit eine Initialisierungsphase, bei der einzelne Register für Sensor-Daten zurückgesetzt werden und die Steuerungseinheit samt ihrer Sensoren in einen betriebsbereiten Zustand versetzt wird. Eine gestrichelte Linie in der Fig. 1 soll veranschaulichen, dass die einzelnen Schritte des dargestellten Verfahrens zu einem beliebigen Zeitpunkt nach dem Starten S0 der Steuerungseinheit durchgeführt werden und auch beliebig oft wiederholt durchgeführt werden können.

In einem auf das Starten S0 des Verfahrens folgenden Schritt S1 werden mit einem ersten Sensor D1 zum Erfassen von Wärmestrahlung und zumindest einem weiteren Sensor D2 der Steuerungseinheit Sensor-Signale eingelesen und erfasst. Vorzugsweise werden die Signale von einem stationären Beobachtungspunkt aus in einem festgelegten vorbestimmten Zeitintervall erfasst. Da Bewegungen eines Körpers innerhalb eines zu überwachenden Bereichs festgestellt werden sollen, ist es besonders vorteilhaft, wenn das Erfassen der Sensor-Signale aus einer Ruheposition heraus erfolgt, da dadurch keine Relativbewegungen des mit der Steuerungseinheit ausgestatteten Reinigungsroboters berücksichtigt werden müssen, die ein Ergebnis verfälschen könnten. Darüber hinaus würden stationäre Wärmequellen in dem zu überwachenden Bereich fälschlicherweise als sich bewegende Körper wahrgenommen. Die Erfassung der Sensor-Signale erfolgt erfindungsgemäss zweckmäßigerweise gleichzeitig. Dadurch kann ein chronologisch gleichzeitig registriertes bzw. erfasstes Ereignis - hier die Detektion eines Körpers - genauer überprüft werden. Vorteilhafterweise erfolgt ein Erfassen der Sensor-Signale in mehreren Intervallen wodurch Änderungen gegenüber vorhergehender Messungen und Signal-Erfassungen zuverlässig festgestellt werden können.

Darüber hinaus erfolgt das Erfassen der Sensor-Signale mittels zumindest zweier Sensoren, die ein unterschiedliches Wirkprinzip aufweisen. Demzufolge kann eine potentielle Fehlerquelle, bei Sensoren die auf dem gleichen Wirkprinzip beruhen, minimiert werden. Erfindungsgemäss wird zusätzlich zu dem SensorSignal eines Sensors D1 für Wärmestrahlung das Signal eines weiteren - hier zweiten - Sensors D2 erfasst und verarbeitet. Bei einer weiteren vorteilhaften Ausführungsform ist der Einsatz weiterer Sensoren DN möglich. Bei dem zweiten und jedem weiteren Sensor D2 bzw., ..., DN handelt es sich im Wesentlichen um Sensoren D2, ..., DN, mit deren Hilfe Bewegungen in einem vorbestimmten Bereich detektiert werden können. Hierzu gehören unter anderem berührungslose weitere Sensoren D2, ..., DN wie: eine Lichtschranke und/oder ein Radar und/oder ein Lidar und/oder ein Sonar und/oder ein Ultraschallsensor. Einige dieser Sensoren sind bereits in einem Navigationssystem bzw. Ortungssystem des Reinigungsroboters integriert und können deswegen für zusätzliche Aufgaben verwendet werden. Nach Bedarf kann die Steuerungseinheit gezielt mit Sensoren bestimmter Wirkprinzipien ausgestattet werden, um optimale Detektionsergebnisse in Abhängigkeit der zu überwachenden Bereiche erzielen zu können.

Die von den Sensoren D1, D2, ..., DN erfassten Sensor-Signale werden anschließend in einem weiteren Schritt S2 mittels eines Wandlers der Steuerungseinrichtung in von der Steuereinrichtung verarbeitbare Sensor-Daten umgeformt. Dieses können herkömmliche Analog-Digital Wandler sein. Die Sensor-Daten werden dann in einem weiteren Schritt S3 zur weiteren Verarbeitung in zumindest einem Speicher der Steuerungseinrichtung abgespeichert.

In einem darauf folgenden Schritt S4 wird eine Abweichung zumindest zweier zeitlich verschiedener - d. h. zu unterschiedlichen zeitlichen Intervallen erfassten - Sensor-Daten ermittelt. Dadurch lässt sich eine eventuelle Bewegung eines Körpers in dem zu überwachenden Bereich detektieren.

Um eine im Schritt S4 ermittelte Abweichung zuordnen zu können, wird diese in einem weiteren Schritt S5 mit einem vorgegebenen Schwellwert für den jeweiligen Sensor verglichen. Je nach Erfordernissen und vorherrschenden Gegebenheiten in zu überwachenden Bereich kann dieser sensorspezifische Schwellwert speziell eingestellt werden. Dadurch lassen sich Alarmsignale in einer Relevanzliste klassifizieren: sehr wichtig, wichtig, weniger wichtig, beispielsweise Katze im Raum als reine Information an den Kunden über App; oder aber Feueralarm direkt an die Feuerleitstelle und an den Kunden/Benutzer.

Anschließend wird in einem Schritt S6 ein Ergebnis des Vergleichs zur weiteren Verarbeitung bereitgestellt und/oder ausgegeben. Je nach Ausführungsform kann das Ergebnis in einem Speicher der Steuerungseinrichtung zu Zwecken einer Überwachungs-Historie abgelegt werden und/oder weiterverwendet werden. Insbesondere dann, wenn ein Schwellwert einer der Sensoren D1, D2, ..., DN überschritten worden ist, können weitere in der Fig. 1 nicht dargestellte Schritte des Verfahrens eingeleitet werden. Das Überschreiten eines Schwellwertes kann dazu verwendet werden, den Reinigungsroboter in eine Art Verdachts-Modus zu schalten und/oder den Reinigungsroboter dazu veranlassen, in einen Patrouillen-Modus umzuschalten, bei dem der Reinigungsroboter weitere Beobachtungspunkte anfährt von denen aus er weitere Überprüfungen des überwachten Bereichs vornehmen kann, um den überschrittenen Schwellwert zusätzlich zu überprüfen.

Wenn anhand der bereitgestellten Ergebnisse aus Schritt S6 in einem weiteren Schritt S7 festgestellt wird, dass der Schwellwert des ersten Sensors D1 für Wärmestrahlung und ein Schwellwert des zumindest einen weiteren Sensors D2, ..., DN gleichzeitig überschritten werden, wird in einem weiteren Schritt S8 ein Warnsignal ausgegeben. Das gleichzeitige Überschreiten von Schwellwerten mehrerer Sensoren D1, D2, ..., DN ist ein starkes Indiz dafür, dass innerhalb des überwachten Bereichs ein beweglicher Körper identifiziert wurde. Ansonsten werden die Verfahrensschritte erneut durchlaufen.

Mittels einer Kommunikationseinheit, die an die Steuerungseinheit des Reinigungsroboters koppelbar ist, können die einzelnen Ergebnisse des Verfahrens und oder das Warnsignal an einen Benutzer übermittelt werden, der, dadurch veranlasst, über weitere zu unternehmende Handlungen entscheiden kann.

Die Kommunikationseinheit kann auch dazu verwendet werden, dass weitere Überwachungsvorrichtungen, die denselben oder Teile desselben Bereichs überwachen, welche der Reinigungsroboter überprüft, Ergebnisse mit der weiteren Überwachungsvorrichtung austauscht. Dadurch kann die Plausibilität der Ergebnisse überprüft werden und eine noch genauere und zuverlässigere Aussage darüber getroffen werden, ob sich in dem zu überwachenden Bereich ein beweglicher Körper befindet oder nicht.

Durch die vorliegende Erfindung lassen sich große zu überwachende Bereiche mittels eines Reinigungsroboters kostengünstig kontrollieren. Je nach Ausführungsform kann der Reinigungsroboter mittels des Verfahrens der Art programmiert werden, dass er den zu überwachenden Bereich zyklisch und solange der Kunde es wünscht, abfährt und dadurch kontrolliert. Dieses kann anhand eines Patrouillen-Zeitplans in einem Speicher der Steuerungseinrichtung des Reinigungsroboters hinterlegt werden. Darüber hinaus können bestimmte Bereichs-Karten sowie vorbestimmte Beobachtungspunkte für den in den Bereichs-Karten definierten und zu überwachenden Bereich hinterlegt werden. Auf diese Weise können stationäre Wärmequellen leichter identifiziert werden und dadurch Zuverlässigkeit der Ergebnisse des Verfahrens zum Überwachen eines vorgegebenen Bereichs mittels eines Reinigungsroboters verbessert werden. Insgesamt wird die Gebrauchstauglichkeit des Überwachungsverfahrens und des damit betriebenen Reinigungsroboters gesteigert und die Kundenzufriedenheit erhöht.

### BEZUGSZEICHENLISTE

- S0: Start/Initialisierung
- D1: Signal-Daten des ersten Sensors für Wärmestrahlung
- D2: Signal-Daten eines weiteren Sensors
- DN: Signal-Daten eines beliebigen weiteren Sensors
- S1: Erfassen der eingelesenen Signal-Daten (D1, D1)
- S2: Umformen der Sensor-Daten
- S3: Abspeichern der Sensor-Daten
- S4: Ermitteln einer Abweichung
- S5: Vergleichen der ermittelten Abweichung
- S6: Bereitstellen und/oder Ausgeben eines Ergebnisses
- S7: Feststellen ob mehr als ein Schwellwert der Sensoren überschritten wurde
- S8: Ausgabe eines Warnsignals

## Patentansprüche

1. Verfahren zum Überwachen eines vorgegebenen Bereichs für eine Steuerungseinrichtung in einem Reinigungsroboter, die einen ersten Sensor (D1) für Wärmestrahlung und zumindest einen weiteren Sensor (D2, ..., DN) aufweist, wobei der Reinigungsroboter den ersten Sensor (D1) für Wärmestrahlung und zumindest den weiteren Sensor (D2, ..., DN) umfasst, die Schritte umfassend:
- gleichzeitiges Erfassen (S1) von Sensor-Signalen des ersten Sensors (D1) für Wärmestrahlung und des zumindest einen weiteren Sensors (D2, ..., DN) an einem Beobachtungspunkt in einem vorbestimmten zeitlichen Intervall;
- Umformen (S2) der erfassten (S1) Sensor-Signale in von der Steuerungseinrichtung verarbeitbare Sensor-Daten,
- Abspeichern (S3) der Sensor-Daten des jeweiligen Sensors in zumindest einem Datenspeicher der Steuerungseinrichtung;
- Ermitteln (S4) einer Abweichung zumindest zweier zeitlich verschiedener Sensor-Daten des jeweiligen Sensors (D1, D2, ..., DN);
- Vergleichen (S5) der ermittelten (S4) Abweichung der Daten des jeweiligen Sensors (D1, D2, ..., DN) mit einem vorgegebenen Schwellwert des jeweiligen Sensors (D1, D2, ..., DN);
- Bereitstellen (S6) und/oder Ausgeben eines Ergebnisses des Vergleichs (S5), wenn ein vorgegebener Schwellwert des jeweiligen Sensors (D1, D2, ..., DN) überschritten (S7) wird,
- wobei sich der Reinigungsroboter an zumindest einen weiteren ortsfesten Beobachtungspunkt begibt, wenn nur ein vorgegebener Schwellwert des jeweiligen Sensors (D1, D2, ..., DN) des Reinigungsroboters überschritten (S7) wird; und
- Ausgeben (S8) eines Warnsignals, wenn der Schwellwert des ersten Sensors (D1) für Wärmestrahlung des Reinigungsroboters und ein Schwellwert des zumindest einen weiteren Sensors (D2, ..., DN) des Reinigungsroboters gleichzeitig überschritten (S7) werden.

2. Verfahren nach Anspruch 1, **dadurch gekennzeichnet, dass** der Reinigungsroboter beim Erfassen (S1) der Sensor-Signale in dem vorbestimmten zeitlichen Intervall sich ortsfest an dem Beobachtungspunkt befindet, und/oder dass das Überschreiten eines Schwellwertes dazu verwendet werden kann, den Reinigungsroboter in einen Verdachts-Modus zu schalten, und/oder dass das Überschreiten eines Schwellwertes dazu verwendet werden kann, den Reinigungsroboter dazu zu veranlassen, in einen Patrouillen-Modus umzuschalten, bei dem der Reinigungsroboter weitere Beobachtungspunkte anfährt von denen aus er weitere Überprüfungen des überwachten Bereichs vornehmen kann, um den überschrittenen Schwellwert zusätzlich zu überprüfen.

3. Verfahren nach einem der vorhergehenden Ansprüche 1 oder 2, **dadurch gekennzeichnet, dass** der Beobachtungspunkt und/oder eine Verweildauer des Reinigungsroboters an dem Beobachtungspunkt und/oder das vorbestimmten zeitlichen Intervall beim Erfassen (S1) der Sensor-Signale mittels der Steuerungseinrichtung des Reinigungsroboters an dem Beobachtungspunkt variierbar sind.

4. Verfahren nach einem der vorhergehenden Ansprüche, **dadurch gekennzeichnet, dass** der Beobachtungspunkt und/oder eine Verweildauer des Reinigungsroboters an dem Beobachtungspunkt und/oder das vorbestimmte zeitliche Intervall beim Erfassen (S1) der Sensor-Signale mittels der Steuerungseinrichtung des Reinigungsroboters an dem Beobachtungspunkt in Abhängigkeit eines vorgegebenen Kontrollplans bestimmt wird, der in einem Speicher der Steuerungseinrichtung hinterlegt ist.

5. Verfahren nach einem der vorhergehenden Ansprüche, **dadurch gekennzeichnet, dass** die von der Steuerungseinrichtung bereitgestellten (S6) Ergebnisse des Vergleichs (S5), mit Ergebnissen einer weiteren Überwachungsanlage desselben vorgegebenen Bereichs mittels einer an die Steuerungseinrichtung anschließbaren Kommunikationseinrichtung des Reinigungsroboters gegenseitig übertragbar und kombinierbar sind.

6. Verfahren nach Anspruch 5, **dadurch gekennzeichnet, dass** mittels der an die Steuerungseinrichtung anschließbaren Kommunikationseinrichtung des Reinigungsroboters das Warnsignal an eine Empfangsvorrichtung des Benutzers und/oder eine zentrale Überwachungsleitstelle ausgegeben (S8) wird.

7. Steuerungseinrichtung in einem Reinigungsroboter zum Überwachen eines vorgegebenen Bereichs gemäß einem Verfahren nach einem der vorhergehenden Ansprüche 1 bis 6 umfassend:
- einen ersten Sensor (D1) zum Erfassen (S1) von Wärmestrahlung und zumindest einen weiteren Sensor (D2, ..., DN), welche eingerichtet sind, gleichzeitig Sensor-Signale an einem Beobachtungspunkt in einem vorbestimmten zeitlichen Intervall zu erfassen (S1), wobei der Reinigungsroboter den ersten Sensor (D1) für Wärmestrahlung und zumindest den weiteren Sensor (D2, ..., DN) umfasst,
- Mittel, die Sensor-Signale in von der Steuerungseinrichtung verarbeitbare Sensor-Daten umzuformen (S2),
- zumindest einen Datenspeicher zum Abspeichern (S3) der Sensor-Daten des jeweiligen Sensors (D1, D2, ..., DN) der Steuerungseinrichtung;
- Mittel zum Ermitteln (S4) einer Abweichung zumindest zweier zeitlich verschiedener Sensor-Daten des jeweiligen Sensors (D1, D2, ..., DN),
- Mittel zum Vergleichen (S5) der ermittelten (S4) Abweichung der Daten des jeweiligen Sensors (D1, D2, ..., DN) mit einem vorgegebenen Schwellwert des jeweiligen Sensors (D1, D2, ..., DN),
- Mittel zum Bereitstellen (S6) und/oder Ausgeben eines Ergebnisses des Vergleichs (S5), wenn ein vorgegebener Schwellwert des jeweiligen Sensors (D1, D2, ..., DN) überschritten (S7) wird
- Mittel zum Begeben des Reinigungsroboters an zumindest einen weiteren ortsfesten Beobachtungspunkt, wenn nur ein vorgegebener Schwellwert des jeweiligen Sensors (D1, D2, ..., DN) des Reinigungsroboters überschritten (S7) wird; und
- Mittel zum Ausgeben (S8) eines Warnsignals, wenn der Schwellwert des ersten Sensors (D1) für Wärmestrahlung des Reinigungsroboters und ein Schwellwert des zumindest einen weiteren Sensors (D2, ..., DN) des Reinigungsroboters gleichzeitig überschritten (S7) werden.

8. Steuerungseinrichtung nach Anspruch 7, **dadurch gekennzeichnet, dass** der erste Sensor (D1) für Wärmestrahlung ein berührungsloser Sensor ist.

9. Steuerungseinrichtung nach einem der vorhergehenden Ansprüche 7 oder 8, **dadurch gekennzeichnet, dass** der berührungslose Sensor für Wärmestrahlung ein Pyrometer oder eine Wärmebildkamera ist.

10. Steuerungseinrichtung nach einem der vorhergehenden Ansprüche 7 bis 9, **dadurch gekennzeichnet, dass** der zumindest eine weitere Sensor (D2, ..., DN) der Steuerungseinrichtung ein berührungsloser Sensor mit einem vom Sensor für Wärmestrahlung unterschiedlichen Wirkprinzip ist.

11. Steuerungseinrichtung nach einem der vorhergehenden Ansprüche 7 bis 10, **dadurch gekennzeichnet, dass** der zumindest eine weitere berührungslose Sensor (D2, ..., DN) eine Lichtschranke und/oder ein Radar und/oder ein Lidar und/oder ein Sonar und/oder ein Ultraschallsensor ist.

12. Reinigungsroboter mit einer Steuerungseinrichtung nach einem der vorhergehenden Ansprüche 7 bis 11 zum Überwachen eines vorgegebenen Bereichs gemäß einem Verfahren nach einem der vorhergehenden Ansprüche 1 bis 6.

## Claims

1. Method for monitoring a predefined region for a control facility in a cleaning robot, which has a first sensor (D1) for thermal radiation and at least one further sensor (D2, ..., DN), wherein the cleaning robot comprises the first sensor (D1) for thermal radiation and at least the further sensor (D2, ..., DN), the steps comprising:
- simultaneously recording (S1) sensor signals of the first sensor (D1) for thermal radiation and of the at least one further sensor (D2, ..., DN) at an observation point at a predetermined temporal interval;
- converting (S2) the recorded (S1) sensor signals into sensor data that can be processed by the control facility;
- storing (S3) the sensor data of the respective sensor in at least one data storage unit of the control facility;
- ascertaining (S4) a deviation between at least two temporally different items of sensor data of the respective sensor (D1, D2, ..., DN);
- comparing (S5) the ascertained (S4) deviation of the data of the respective sensor (D1, D2, ..., DN) with a predefined threshold value of the respective sensor (D1, D2, ..., DN);
- providing (S6) and/or outputting a result of the comparison (S5) when a predefined threshold value of the respective sensor (D1, D2, ..., DN) is exceeded (S7);
- wherein the cleaning robot brings itself to at least one further observation point at a fixed location when only one predefined threshold value of the respective sensor (D1, D2, ..., DN) of the cleaning robot is exceeded (S7); and
- outputting (S8) a warning signal when the threshold value of the first sensor (D1) for thermal radiation of the cleaning robot and a threshold value of the at least one further sensor (D2, ..., DN) of the cleaning robot are simultaneously exceeded (S7).

2. Method according to claim 1, **characterised in that**, when recording (S1) the sensor signals in the predetermined temporal interval, the cleaning robot is situated at the observation point at a fixed location, and/or the exceeding of a threshold value can be used to switch the cleaning robot into a suspicion mode, and/or the exceeding of a threshold value can be used to prompt the cleaning robot to switch into a patrol mode, in which the cleaning robot approaches further observation points, from which it can undertake further reviews of the monitored region, in order to additionally review the exceeded threshold value.

3. Method according to one of the preceding claims 1 or 2, **characterised in that** the observation point and/or a dwell time of the cleaning robot at the observation point and/or the predetermined temporal interval when recording (S1) the sensor signals can be varied by means of the control facility of the cleaning robot at the observation point.

4. Method according to one of the preceding claims, **characterised in that** the observation point and/or a dwell time of the cleaning robot at the observation point and/or the predetermined temporal interval when recording (S1) the sensor signals is determined by means of the control facility of the cleaning robot at the observation point as a function of a predefined control plan, which is stored in a memory of the control facility.

5. Method according to one of the preceding claims, **characterised in that** the results of the comparison (S5) provided (S6) by the control facility can be mutually transferred and combined with results of a further monitoring installation of the same predefined region by means of a communication facility, which can be connected to the control facility, of the cleaning robot.

6. Method according to claim 5, **characterised in that** the warning signal is output (S8) to a receiving apparatus of the user and/or a central monitoring control point by means of the communication facility, which can be connected to the control facility, of the cleaning robot.

7. Control facility in a cleaning robot for monitoring a predefined region according to a method according to one of the preceding claims 1 to 6, comprising:
- a first sensor (D1) for recording (S1) thermal radiation and at least one further sensor (D2, ..., DN), which are configured to simultaneously record (D1) sensor signals at an observation point at a predetermined temporal interval, wherein the cleaning robot comprises the first sensor (D1) for thermal radiation and at least the further sensor (D2, ..., DN);
- means for converting (S2) the sensor signals into sensor data that can be processed by the control facility;
- at least one data storage unit for storing (S3) the sensor data of the respective sensor (D1, D2, ..., DN) of the control facility;
- means for ascertaining (S4) a deviation between at least two temporally different items of sensor data of the respective sensor (D1, D2, ..., DN);
- means for comparing (S5) the ascertained (S4) deviation of the data of the respective sensor (D1, D2, ..., DN) with a predefined threshold value of the respective sensor (D1, D2, ..., DN);
- means for providing (S6) and/or outputting a result of the comparison (S5) when a predefined threshold value of the respective sensor (D1, D2, ..., DN) is exceeded (S7);
- means for bringing the cleaning robot to at least one further observation point at a fixed location when only one predefined threshold value of the respective sensor (D1, D2, ..., DN) of the cleaning robot is exceeded (S7); and
- means for outputting (S8) a warning signal when the threshold value of the first sensor (D1) for thermal radiation of the cleaning robot and a threshold value of the at least one further sensor (D2, ..., DN) of the cleaning robot are simultaneously exceeded (S7).

8. Control facility according to claim 7, **characterised in that** the first sensor (D1) for thermal radiation is a contactless sensor.

9. Control facility according to one of the preceding claims 7 or 8, **characterised in that** the contactless sensor for thermal radiation is a pyrometer or a thermal imaging camera.

10. Control facility according to one of the preceding claims 7 to 9, **characterised in that** the at least one further sensor (D2, ..., DN) of the control facility is a contactless sensor with an operating principle that differs from the sensor for thermal radiation.

11. Control facility according to one of the preceding claims 7 to 10, **characterised in that** the at least one further contactless sensor (D2, ..., DN) is a light barrier and/or a radar and/or a lidar and/or a sonar and/or an ultrasonic sensor.

12. Cleaning robot with a control facility according to one of the preceding claims 7 to 11 for monitoring a predefined region according to a method according to one of the preceding claims 1 to 6.

## Revendications

1. Procédé de surveillance d'une zone prédéterminée pour un dispositif de commande dans un robot de nettoyage, qui inclut un premier capteur (D1) de rayonnement thermique et au moins un capteur supplémentaire (D2, ..., DN), dans lequel le robot de nettoyage comprend le premier capteur (D1) de rayonnement thermique et au moins le capteur supplémentaire (D2, ..., DN), le procédé comprenant les étapes suivantes :
- détection simultanée (S1) de signaux de capteur du premier capteur (D1) de rayonnement thermique et d'au moins un capteur supplémentaire (D2, ..., DN) à un endroit d'observation dans un intervalle de temps prédéterminé,
- conversion (S2) des signaux de capteurs détectés (S1) en des données de capteur pouvant être traitées par le dispositif de commande,
- stockage (S3) des données de capteur du capteur respectif dans au moins un stockage de données du dispositif de commande,
- détermination (S4) d'un écart entre au moins deux données de capteur différentes dans le temps du capteur respectif (D1, D2, ..., DN),
- comparaison (S5) de l'écart déterminé (S4) des données du capteur respectif (D1, D2, ..., DN) avec une valeur seuil prédéterminée du capteur respectif (D1, D2, ..., DN),
- fourniture (S6) et/ou délivrance d'un résultat de la comparaison (S5) lorsqu'une valeur seuil prédéterminée du capteur respectif (D1, D2, ..., DN) est dépassée (S7),
- dans lequel le robot de nettoyage se rend à au moins un endroit d'observation fixe supplémentaire, lorsqu'une seule valeur seuil prédéterminée du capteur respectif (D1, D2, ..., DN) du robot de nettoyage est dépassée (S7), et
- l'émission (S8) d'un signal d'alerte lorsque la valeur seuil du premier capteur (D1) de rayonnement thermique du robot de nettoyage et une valeur seuil de l'au moins un capteur supplémentaire (D2, ..., DN) du robot de nettoyage sont dépassées (S7) simultanément.

2. Procédé selon la revendication 1, **caractérisé en ce que** le robot de nettoyage, lors de la détection (S1) des signaux de capteur dans l'intervalle de temps prédéterminé, se trouve de façon stationnaire à l'endroit d'observation, et/ou **en ce que** le dépassement d'une valeur seuil peut être utilisé pour commuter le robot de nettoyage dans un mode de suspicion, et/ou **en ce que** le dépassement d'une valeur seuil peut être utilisé pour amener le robot de nettoyage à commuter dans un mode de patrouille, dans lequel le robot de nettoyage se déplace à d'autres endroits d'observation à partir desquels il peut effectuer des examens supplémentaires de la zone surveillée pour vérifier davantage la valeur seuil dépassée.

3. Procédé selon l'une des revendications précédentes 1 ou 2, **caractérisé en ce que** l'endroit d'observation et/ou un temps de séjour du robot de nettoyage à l'endroit d'observation et/ou l'intervalle de temps prédéterminé lors de la détection (S1) des signaux de capteur peuvent être modifiés au moyen du dispositif de commande du robot de nettoyage à l'endroit d'observation.

4. Procédé selon l'une des revendications précédentes, **caractérisé en ce que** l'endroit d'observation et/ou un temps de séjour du robot de nettoyage à l'endroit d'observation et/ou l'intervalle de temps prédéterminé lors de la détection (S1) des signaux de capteur est(sont) déterminé(s) au moyen du dispositif de commande du robot de nettoyage à l'endroit d'observation en fonction d'un plan de contrôle prédéterminé, qui est stocké dans une mémoire du dispositif de commande.

5. Procédé selon l'une des revendications précédentes, **caractérisé en ce que** les résultats de la comparaison (S5) fournis (S6) par le dispositif de commande peuvent être combinés avec des résultats d'une installation de surveillance supplémentaire de la même zone prédéterminée et peuvent être transmis entre eux au moyen d'un dispositif de communication du robot de nettoyage connectable au dispositif de commande.

6. Procédé selon la revendication 5, **caractérisé en ce que** le signal d'alerte est délivré (S8) à un dispositif de réception de l'utilisateur et/ou un poste de commande central de surveillance au moyen du dispositif de communication du robot de nettoyage connectable au dispositif de commande.

7. Dispositif de commande dans un robot de nettoyage permettant de surveiller une zone prédéterminée selon un procédé selon l'une des revendications précédentes 1 à 6, comprenant :
- un premier capteur (D1) pour détecter (S1) un rayonnement thermique et au moins un capteur supplémentaire (D2, ..., DN), qui sont configurés pour détecter (S1) simultanément des signaux de capteur à un endroit d'observation dans un intervalle de temps prédéterminé, dans lequel le robot de nettoyage comprend le premier capteur (D1) de rayonnement thermique et au moins le capteur supplémentaire (D2, ..., DN),
- des moyens pour convertir (S2) les signaux de capteurs en des données de capteur pouvant être traitées par le dispositif de commande,
- au moins un stockage de données pour stocker (S3) des données de capteur du capteur respectif (D1, D2, ..., DN) du dispositif de commande,
- des moyens de détermination (S4) d'un écart entre au moins deux données de capteur différentes dans le temps du capteur respectif (D1, D2, ..., DN),
- de moyens de comparaison (S5) de l'écart déterminé (S4) des données du capteur respectif (D1, D2, ..., DN) avec une valeur seuil prédéterminée du capteur respectif (D1, D2, ..., DN),
- des moyens de fourniture (S6) et/ou de délivrance d'un résultat de la comparaison (S5) lorsqu'une valeur seuil prédéterminée du capteur respectif (D1, D2, ..., DN) est dépassée (S7),
- des moyens pour déplacer le robot de nettoyage à au moins un endroit d'observation fixe supplémentaire, lorsqu'une seule valeur seuil prédéterminée du capteur respectif (D1, D2, ..., DN) du robot de nettoyage est dépassée (S7), et
- des moyens d'émission (S8) d'un signal d'alerte lorsque la valeur seuil du premier capteur (D1) de rayonnement thermique du robot de nettoyage et une valeur seuil de l'au moins un capteur supplémentaire (D2, ..., DN) du robot de nettoyage sont dépassées (S7) simultanément.

8. Dispositif de commande selon la revendication 7, **caractérisé en ce que** le premier capteur (D1) de rayonnement thermique est un capteur sans contact.

9. Dispositif de commande selon l'une des revendications précédentes 7 ou 8, **caractérisé en ce que** le capteur sans contact de rayonnement thermique est un pyromètre ou une caméra thermique.

10. Dispositif de commande selon l'une des revendications précédentes 7 à 9, **caractérisé en ce que** l'au moins un capteur supplémentaire (D2, ..., DN) du dispositif de commande est un capteur sans contact ayant un principe d'action différent du capteur de rayonnement thermique.

11. Dispositif de commande selon l'une des revendications précédentes 7 à 10, **caractérisé en ce que** l'au moins un capteur sans contact supplémentaire (D2, ..., DN) est une cellule photoélectrique et/ou un radar et/ou un lidar et/ou un sonar et/ou un capteur à ultrasons.

12. Robot de nettoyage comprenant un dispositif de commande selon l'une des revendications précédentes 7 à 11 pour surveiller une zone prédéterminée selon un procédé selon l'une des revendications précédentes 1 à 6.
